# EUROPÄISCHE PATENTSCHRIFT

(11) **EP 1 094 348 B1**
(45) Veröffentlichungstag und Bekanntmachung des Hinweises auf die Patenterteilung: **20.04.2005**
(21) Anmeldenummer: 00121184.6
(22) Anmeldetag: 29.09.2000
(51) Int. Cl.: G02B 7/02

(54) **Elastische Linsenträger**
Elastic lens mount
Montage élastique pour lentilles

(30) Priorität: 06.10.1999 DE 19948640; 24.08.2000 DE 10043344
(43) Veröffentlichungstag der Anmeldung: 25.04.2001
(73) Patentinhaber: JENOPTIK Aktiengesellschaft, 07743 Jena (DE)
(72) Erfinder: Schletterer, Thomas, 99510 Ossmanstedt (DE)
(74) Vertreter: Schaller, Renate

(56) Entgegenhaltungen:
- DE-A- 19 623 418
- US-A- 3 904 276
- US-A- 4 854 671
- US-A- 5 754 350

## Beschreibung

Die Erfindung betrifft eine optische Baugruppe, bestehend aus einer Linse und einer Linsenfassung, in der die Linse über deren Umfangsfläche radial elastisch gefasst ist.

Eine derartige Ausführungsform ist im weitesten Sinne aus dem US-Patent 4,812,015 bekannt.

Bei der Entwicklung von UV-Hochleistungsobjektiven ist das spannungsarme Fassen der optischen Elemente ein Kernproblem. Unter dem spannungsarmen Fassen soll verstanden werden, dass das optische Element durch die Fassung selbst möglichst keine Deformation erfährt, sowie dynamische und thermische Belastungen zu keinen Verspannungen oder zur Dejustage des optischen Elementes führen.

Zur Lösung dieses Problems sind aus dem Stand der Technik eine Vielzahl von Anordnungen bekannt, bei denen ein optisches Element wie eine Linse mittels elastischer Mittel in einer Fassung gehalten wird.

Beispielsweise ist aus der deutschen Patentanmeldung DE 28 46 241 A1 eine Anordnung bekannt, bei welcher eine in ihrer Fassung radial geführte Linse durch mindestens zwei den Randbereich der Linse übergreifende Plättchen axial an eine feste Anlage angedrückt wird. Die Plättchen sind aus einem elastischen Material und formschlüssig in der Fassung derart gehalten, dass sie unter Vorspannung an der Linse anliegen.
Durch die axial elastische Lagerung der Linse kann eine thermische Ausdehnung der Linse in axialer Richtung kompensiert werden. Ebenso können dynamische Belastungen gedämpft werden. Um auch eine radiale thermische Ausdehnung der Linse zu ermöglichen, ohne dass Radialspannungen in der Linse auftreten, die zu dramatischen Verschlechterungen der optischen Abbildung führen können, muss in Abhängigkeit von den unterschiedlichen thermischen Ausdehnungskoeffizienten der Fassung und der Linse ein ausreichendes Passungsspiel gegeben sein. Im Rahmen dieses Passungsspieles kann es jedoch bei Einwirkung radialer dynamischer Belastungen zu Dejustierungen kommen.

Im deutschen Gebrauchsmuster G 86 25 896 ist eine zweite axial elastische Halterung für optische Bauteile in einer Fassung beschrieben. Das elastische Halteelement ist hier als geschlossener Ring ausgebildet, der einerseits im Randbereich der Linse und andererseits in einer dafür vorgesehenen Nut an der Fassung anliegt.
Nachteilig an dieser Lösung ist, dass über den in radialer Richtung starren Ring dynamische Belastungen nahezu ungedämpft auf die Linse übertragen werden. Ebenso wie in der vorher aufgeführten Lösung wirken die Federkräfte zur Halterung der Linse auf die optisch wirksame Fläche. Da sich der Betrag der Federkraft in Abhängigkeit von der thermischen Ausdehnung der Linse ändert, kommt es zu veränderten Spannungszuständen in der Linse, die hohen Anforderungen an die Abbildungsqualität, insbesondere bei Hochleistungsobjektiven, nicht gerecht werden.
Aus der DE 196 32 267 A1 ist ein Linsenträger bekannt, bei welchem an der Linsenfassung ausgebildete Rastnasen in einer an der Linse (auch gekittete Linsengruppe) ausgebildeten Eingriffsnut anliegen, um die Linse in der Fassung durch Kraftschluss zu halten. Die Eingriffsnut wird bei einer gekitteten Linsengruppe von den an der Kittfläche zusammentreffenden Phasenflächen der Linsen gebildet.
Bei einer Einzellinse ist die Eingriffsnut keine wirkliche Nut sondern eine Phasenfläche der Linse. Die Lage der Linse innerhalb der Fassung wird in radialer Richtung über eine Spielpassung zwischen einer inneren Umfangsfläche der Linsenfassung und einer äußeren Umfangsfläche der Linse und in axialer Richtung durch Andruck des Randbereiches einer Stirnfläche der Linse an einem Haltevorsprung der Fassung bestimmt.
Die Fassung ist weder thermisch noch mechanisch stabil. Bei einer Ausdehnung und Schrumpfung des Linsenmaterials in Folge einer thermischen Belastung kommt es zwangsläufig zu einer relativen Verschiebung gegenüber der Fassung und damit Reibung einerseits an der Anlage der Rastnasen in der Eingriffsnut der Linse und andererseits an der Anlage des Haltevorsprungs an der Stirnfläche der Linse. Das durch die Reibung entstehende Ruckgleiten führt dazu, dass die Verschiebung undefiniert erfolgt und die Linse nicht in ihre Ausgangslage zurückkehrt. Für Hochleistungsobjektive kann eine derartige Dejustierung die Abbildungsqualität schon erheblich mindern. Die zusätzliche Lagesicherung mittels Klebstoff macht den Linsenträger für UV-Strahlung untauglich.
Mechanische Belastungen wie Stöße werden in radialer Richtung ungedämpft auf die Linse übertragen. Nachteilig ist auch, dass die Linse über ihre optisch wirksame Stirnfläche angedrückt wird, was zur Deformation der Linse führen kann.

Eine in radialer Richtung elastische Halterung ist aus der deutschen Patentanmeldung DE 35 21 640 A1 bekannt. Sie besteht aus mindestens drei an der zylindrischen Umfangsfläche der Linse, vorzugsweise gleichmäßig verteilt aufgebrachten Rippen aus einem hochelastischen Material, vorteilhafterweise aus Silikonkautschuk. Diese werden beim Einbau der Linse in die Fassung komprimiert. Durch die nur geringe mittelbare Kontaktfläche zwischen der Fassung und der Linse an der Umfangsfläche der Linse können sich die Fassung und die Linse in axialer Richtung ungehindert unterschiedlich ausdehnen.
Die Zentrierung der Linse in ihrer Fassung ist unabhängig von thermischen und dynamischen Belastungen stets gewährleistet. Es ist auch von Vorteil, dass die einwirkenden Kräfte am Umfang und nicht an einer optisch wirksamen Fläche angreifen.
Zur Verbesserung der Lagestabilität wird vorgeschlagen, einen ebenfalls mit elastischen Rippen versehenen Vorschraubring bzw. einzuklebenden Steckring zu verwenden, der die Linse zusätzlich in axialer Richtung fixiert. Dies wird für Linsen größerer Masse unerlässlich sein und bedeutet einen zusätzlichen Montageaufwand.

Für Hochleistungsobjektive, für die aufgrund der verwendeten Strahlung UV-Beständigkeit gefordert ist, dürfen jedoch keine organischen Stoffe wie z.B. Kleber, Vergussmassen, Silikonringe und ähnliches verwendet werden, da sich diese unter Einwirkung von UV-Strahlung langfristig zersetzen und eine Kontaminationsgefahr darstellen. Ein mittelbar elastisches Fassen mit organischen Stoffen, wie aus der DE 35 21 640 bekannt, ist daher für Hochleistungsobjektive nicht geeignet.

Aus der US 4,812,015 ist ein Objektivtubus bekannt, bei dem die Objektivlinse bzw. Objektivlinsen in einer Plastikfassung gehalten werden. An der inneren Oberfläche der Fassung sind um 120° zueinander versetzt zwei starre Passteile und eine elastische Ausstülpung angeordnet. Die gefasste Linse wird durch die Rückstellkraft der elastischen Ausstülpung an die starren Passteile angelegt, die eine an die Umfangsform der Linse angepasste Anlagekante aufweisen.
Die Linse wird somit radial elastisch gehalten, allerdings nicht zentriert.
Axial wird die Linse über einen zusätzlichen Haltering starr fixiert.

Der Erfindung liegt nun die Aufgabe zugrunde, eine insbesondere für UV-Objektive geeignete optische Baugruppe, bestehend aus einer Linsenfassung und einer Linse, zu schaffen, bei weicher die Linse radial und axial an ihrer Umfangsfläche elastisch gehalten wird. Darüber hinaus sollen die Linsenfassung und die Linse so gestaltet sein, dass die Linse leicht und schnell montiert werden kann und auch im gefassten Zustand gut gespült werden kann.

Diese Aufgabe wird für eine optische Baugruppe gemäß der Erfindung dadurch gelöst, dass an der Umfangsfläche der Linse eine Ringnut ausgebildet ist und die elastischen Elemente an der Linsenfassung ausgebildete Segmente sind, deren freie Enden in die Ringnut radial eingreifen und die Linse ausschließlich über diese Verbindung radial und axial gehaltert ist.

Durch die Ausbildung radial elastischer Segmente an der Linsenfassung selbst und der Ausbildung einer Ringnut an der Umfangsfläche der Linse wird eine optische Baugruppe geschaffen, in der eine Linse spannungsarm, unmittelbar und ohne zusätzliche Mittel an ihrer Umfangsfläche gefasst werden kann.
Die Geometrie der Segmente ist variierbar und kann somit in Abstimmung mit den Materialkonstanten der Fassung, der Dimensionierung der Segmente und der gewünschten Federsteifigkeit an die vorhandenen Platzverhältnisse für die Linsenfassung angepasst werden.

Die Segmente sind gleich dimensioniert und greifen radial gleichmäßig verteilt in die an der Umfangsfläche eingebrachte Ringnut ein, so dass sich die Linse selbst in der Linsenfassung zentriert. Die Federsteifigkeit der einzelnen Segmente sowie die durch sie auf die Linse einwirkende Rückstellkraft ist gleich. Die Ringnut liegt in einer radialen Ebene.

Die unterschiedliche thermische Ausdehnung der Linsenfassung und der Linse wird in radialer Richtung über die Federwirkung der Segmente kompensiert, während in axialer Richtung eine Kompensation auf Grund des nur linienförmigen Kontaktes nicht erforderlich ist.

Dadurch, dass die Linse mit der Fassung ausschließlich über die elastischen Segmente verbunden ist, werden dynamische Belastungen nur gedämpft auf die Linse übertragen.

Erfindungsgemäß ist es vorteilhaft, wenn die Ringnut in der radialen Ebene der Linse eingebracht ist, bei welcher eine radiale Krafteinwirkung die geringste Durchbiegung der optisch wirksamen Flächen der Linse bewirkt. Diese Ebene wird mittels der sogenannten Finite-Elemente-Methode ermittelt.

Der Querschnitt der Nut ist vorteilhafterweise V-förmig mit einem in der Spitze ausgebildeten Radius. Günstig ist, wenn an den freien Enden der Segmente ein größerer Radius ausgebildet ist, so dass die freien Enden in der V-Nut an deren Flanken zur Anlage kommen.

Fünf Ausführungsbeispiele, die von der Erfindung Gebrauch machen, werden im folgenden anhand der Zeichnung näher erläutert. Sie zeigt in
- Fig. 1.1 bis 1.3: eine erste Ausführungsform
- Fig. 2.1 bis 2.2: eine zweite Ausführungsform
- Fig. 3.1. bis 3.2.: eine dritte Ausführungsform
- Fig. 4: eine vierte Ausführungsform
- Fig.5: eine fünfte Ausführungsform

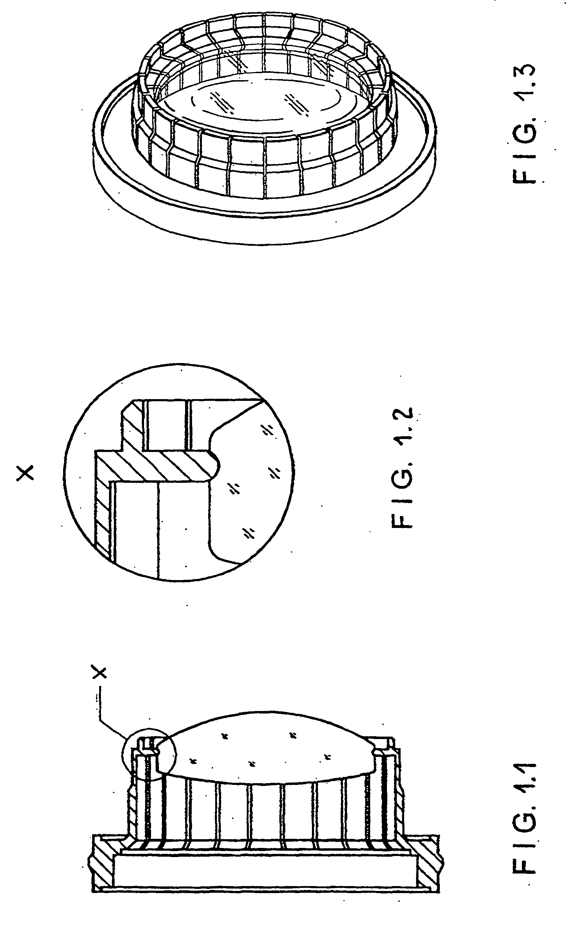

Eine Linsenfassung nach Fig. 1 bis 3 ist in axialer Richtung betrachtet, an ihrem ersten Ende als geschlossener Ring ausgebildet, während an ihrem zweiten Ende die geschlossene Ringform durch eine Vielzahl in axialer Richtung verlaufende Schlitze aufgehoben ist. Dieses geschlitzte Ende stellt eine ringförmige Anordnung von gleich dimensionierten Segmenten dar, die erfindungsgemäß für die einzelnen Ausführungsformen unterschiedlich gestaltet sein können.
Das erste Ende der Linsenfassung kann ebenfalls unterschiedlich gestaltet sein in Abhängigkeit der konstruktiven Gestaltung des Gehäuses, in das die Linsenfassung gegebenenfalls eingebracht werden soll. Die Ausbildung des ersten Endes erfolgt mit fachmännischem Wissen entsprechend den erforderlichen Anschlussbedingungen und soll nicht Gegenstand der Erfindung sein.

Unterschiedliche Ausführungen der Segmente führen zu einem unterschiedlichen Querschnitt der Linsenfassung im Bereich des geschlitzten Endes.

Eine erste Ausführungsform ist in den Fig. 1.1 bis 1.3 dargestellt. Die Segmente sind plattenförmig ausgebildet und nur an ihrem freien Ende abgewinkelt. Im Bereich der Abwinklung ist eine Versteifung ausgebildet. In Abhängigkeit von einem gewünschten Biegemomentverlauf und dem Material der Linsenfassung werden die Dicke, die Länge und die Breite der Segmente gewählt. Die Dicke kann über die Länge auch unterschiedlich sein, wie aus Fig. 1 ersichtlich. Die hier dargestellten Segmente sind jeweils parallel zur Symmetrieachse angeordnet. Sie könnten ebenso winklig verlaufen.

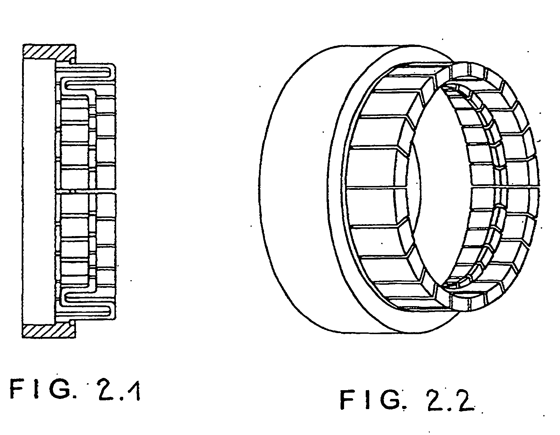

Eine zweite Ausführungsform ist in den Fig. 2.1 bis 2.2 dargestellt. Hier ist die Länge der Segmente durch eine mäanderförmige Gestaltung reduziert. Um die Linsenfassung in axialer Richtung derartig zu verkürzen, muss sie allerdings im Durchmesser größer ausgelegt werden. Auch hier kann durch die konkrete konstruktive Dimensionierung ein gewünschter Biegemomentverlauf für die Segmente erzielt werden.

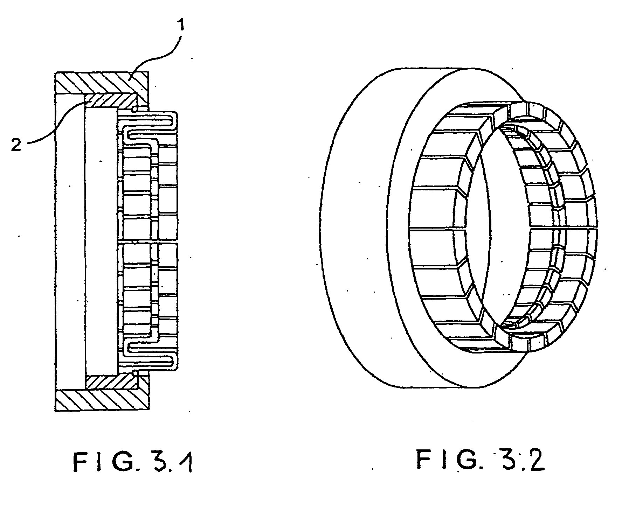

Um bei der Materialwahl für die Segmente unabhängiger zu sein, kann die Fassung auch zweiteilig gestaltet sein. Hierzu ist eine dritte Ausführungsform in den Fig. 3.1 und 3.2 dargestellt. So kann das erste Ende der Linsenfassung aus einem gut spanbaren Material (z.B. zum Justierdrehen) bestehen, während für das zweite Ende ein Material hoher Elastizität eingesetzt wird.

Die durch die Segmentierung entstehenden Schlitze ermöglichen eine Spülung der Linse im gefassten Zustand.

Zur Montage der Linse in die Linsenfassung werden die Segmente gleichzeitig mit einem dafür vorgesehenen Hilfsmittel aufgespreizt und die Linse mit einem Handgriff eingefügt. Es bedarf keiner zusätzlichen Mittel, um die Linsenlage zu sichern, so dass die Montage schnell und unkompliziert erfolgt.

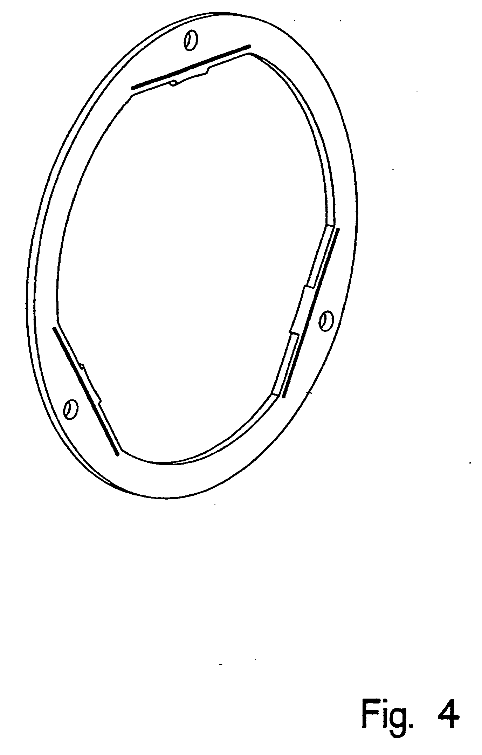

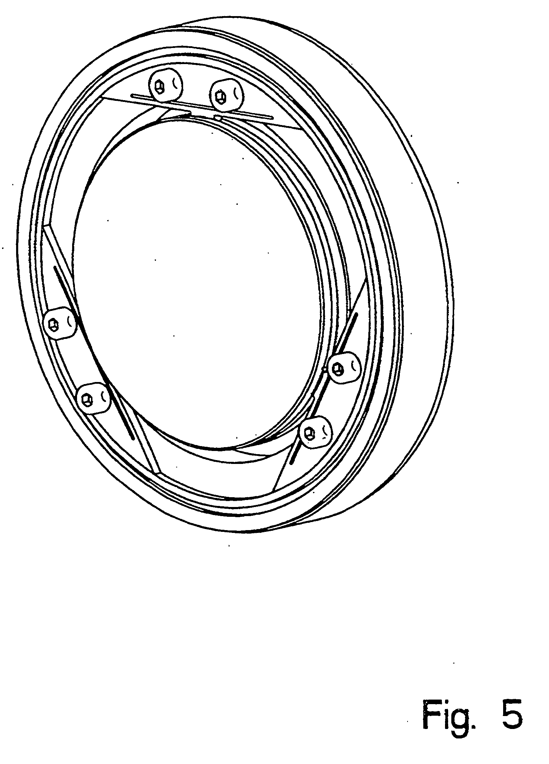

Eine noch platzsparendere Ausführung für eine Linsenfassung ist in Fig. 4 dargestellt. Als elastische Segmente sind hier drei am inneren Umfang des Fassungsringes kreisabschnittsförmige Ausbildungen vorhanden, die in einer Ebene mit der Ringnut liegen. Eine federnde Wirkung wird für diese Segmente durch in tangentialer Richtung eingebrachte Schlitze erreicht. In der Mitte der Schlitze sind an den Ausbildungen Ansätze ausgebildet, die in ihrer Form der Ringnut angepasst sind. Diese Ausführung hat den Vorteil gegenüber den vorher beschriebenen, dass der für den Linsenträger erforderliche Platzbedarf in axialer Richtung nicht mehr durch die Dimensionierung der elastischen Segmente bestimmt wird.
Bei weiteren Ausführungsbeispielen sind die Segmente einzelne kreisabschnittsförmig gestaltete Platten, die auf einer Stirnseite des Fassungsringes mit diesem über eine Schraubverbindung lösbar verbunden sind. Sie wirken gleich denen im vierten Ausführungsbeispiel beschriebenen Segmenten, haben jedoch zwei beachtenswerte Vorteile. Einerseits ist diese Ausführung montagefreundlicher, da zum Einfügen der Linse nicht alle Segmente gespreizt werden müssen, sondern ein einfaches Einlegen bei nur zwei montierten Segmenten und anschließender Befestigung des dritten Segmentes möglich ist. Andererseits können (in der Zeichnung nicht dargestellt) an einem Fassungsring auf dessen beiden Stirnseiten die Segmente angebracht sein, um mit einer Linsenfassung zwei Einzellinsen zu halten. Der notwendige Abstand der Linsen zueinander ist dann bestimmend für die Dicke des Fassungsringes.
Der Fassungsring muss verständlicherweise kein planförmiger Ring sein, sondern kann ebenso einen inneren Bund aufweisen, an dessen Stirnflächen die Segmente anliegen (siehe Fig. 5).

Ebenso können die Segmente auch in einer umlaufenden Nut im Fassungsring eingepasst sein. Wichtig ist lediglich, dass sie alle in einer radialen Ebene an dem Fassungsring anliegen, damit ihre Kraftwirkung in gleicher Ebene gesichert ist.
Die Anzahl der Segmente kann auch höher gewählt werden. Ebenso sind auch andere mechanische Verbindungen zwischen den Segmenten und dem Fassungsring möglich.

## Patentansprüche

1. Optische Baugruppe mit einer Linsenfassung, gebildet aus einem Fassungsring und elastischen Elementen und einer Linse, an deren Umfangsfläche die elastischen Elemente anliegen, **dadurch gekennzeichnet,**
**dass** an der Umfangsfläche der Linse eine Ringnut ausgebildet ist,
**dass** die elastischen Elemente Segmente sind, die jeweils ein mit dem Fassungsring verbundenes festes Ende und ein freies Ende aufweisen, welches in die Ringnut radial eingreift und die Linse radial und axial hält.

2. Optische Baugruppe nach Anspruch 1, **dadurch gekennzeichnet,**
**dass** die Ringnut in einer radialen Ebene der Linse liegt, in der einwirkende Kräfte die geringste Durchbiegung der optisch wirksamen Flächen der Linse bewirken.

3. Optische Baugruppe nach Anspruch 1 oder 2, **dadurch gekennzeichnet,**
**dass** die Ringnut V-förmig ist, mit einem in der Spitze ausgebildeten Radius und an den freien Enden der Segmente ein gleicher Radius ausgebildet ist, so dass die freien Enden in der V-Nut an deren Flanken zur Anlage kommen.

4. Optische Baugruppe nach einem der vorhergehenden Ansprüche, **dadurch gekennzeichnet,**
**dass** die Segmente einen Ring bilden, der seitens der festen Enden geschlossen und seitens der freien Enden in axialer Richtung geschlitzt ist.

5. Optische Baugruppe nach Anspruch 4, **dadurch gekennzeichnet,**
**dass** der geschlossene Ringbereich den Fassungsring darstellt.

6. Optische Baugruppe nach einem der Ansprüche 1 bis 3, **dadurch gekennzeichnet,**
**dass** die Segmente kreisabschnittförmige Ausbildungen am inneren Umfang des Fassungsrings sind, die in tangentialer Richtung geschlitzt sind und mittig einen Ansatz als freies Ende aufweisen.

7. Optische Baugruppe nach einem der Ansprüche 1 bis 3, **dadurch gekennzeichnet,**
**dass** am Fassungsring ein innerer Bund mit einer radialen Stirnfläche ausgebildet ist,
**dass** die Segmente kreisabschnittsförmige Platten sind, die in tangentialer Richtung geschlitzt sind und mittig einen Ansatz als freies Ende aufweisen und
**dass** die Segmente auf der radialen Stirnfläche befestigt sind.

8. Optische Baugruppe nach Anspruch 7, **dadurch gekennzeichnet,**
**dass** der Bund eine zweite radiale Stirnfläche aufweist und auf beiden Stirnflächen Segmente angeordnet sind, um mit einer Linsenfassung zwei Linsen zu halten.

## Claims

1. An optical assembly comprising a lens mount, formed by a mounting ring and elastic elements and a lens, with the elastic elements contacting the peripheral surface of said lens, **characterized in that**
an annular groove is formed on the peripheral surface of the lens,
that the elastic elements are segments, each of said segments comprising a fixed end connected with the mounting ring and a free end, which radially engages the annular groove and holds the lens radially and axially.

2. Optical assembly according to claim 1, **characterized in that** the annular groove is located in a radial plane of the lens in which acting forces cause minimal bending of the optically effective surfaces of the lens.

3. Optical assembly according to claim 1 or 2, **characterized in that** the annular groove is V-shaped, with a radius being provided in the tip and an equal radius being provided at the free ends of the segments, so that the free ends contact the V-groove at the flanks thereof.

4. Optical assembly according to any one of the preceding claims, **characterized in that** the segments form a ring, which is closed on the side of the fixed ends and slotted in an axial direction.

5. Optical assembly according to claim 4, **characterized in that** the closed annular region represents the mounting ring.

6. Optical assembly according to any one of claims 1 to 3, **characterized in that** the segments are structures in the shape of circle segments on the inner circumference of the mounting ring, which are slotted in a tangential direction and are centrally provided with a boss as a free end.

7. Optical assembly according to any one of claims 1 to 3, **characterized in that** an inner collar having a radial end face is provided on the mounting ring,
that the segments are plates in the shape of circle segments, which are slotted in a tangential direction and are centrally provided with a boss as a free end, and
that the segments are attached to the radial end face.

8. Optical assembly according to claim 7, **characterized in that** the collar comprises a second radial end face and segments are arranged on both end faces so as to hold two lenses with one lens mount.

## Revendications

1. Ensemble optique comportant un support de lentille, qui est constitué d'un anneau de support et d'éléments élastiques et d'une lentille, lesdits éléments élastiques étant en contact avec la surface périphérique de ladite lentille, **caractérisé en ce qu'**une rainure annulaire est formée sur la surface périphérique de la lentille, **en ce que** les éléments élastiques sont des segments, chacun desdits segments comportant une éxtrémité fixe liée avec l'anneau de support et une extrémité libre qui s'engrène radialement dans la rainure annulaire et qui supporte ladite lentille radialement et axialement.

2. Ensemble optique selon la revendication 1, **caractérisé en ce que** la rainure annulaire est disposée dans un plan radial de la lentille, dans lequel des forces appliquées ont pour effet une déflexion minimale des surfaces optiquement actives de ladite lentille.

3. Ensemble optique selon la revendication 1 ou 2, **caractérisé en ce que** la rainure annulaire est en forme de V, ayant un rayon formé dans la pointe et un rayon égal formé aux extrémités libres des segments de sorte que les extrémités libres sont en contact avec ladite rainure en V, aux flancs de celle-ci.

4. Ensemble optique selon l'une quelconque des revendications précédentes, **caractérisé en ce que** lesdits segments constituent un anneau qui est fermé, de la côté des extrémités fixes, et fendu en direction axiale.

5. Ensemble optique selon la revendication 4, **caractérisé en ce que** la zone annulaire fermée représente l'anneau de support.

6. Ensemble optique selon l'une quelconque des revendications 1 à 3, **caractérisé en ce que** lesdits segments sont des structures en forme de segments de cercle sur la circonférence interne de l'anneau de support qui sont fendus en direction tangentielle et qui sont pourvus, à leur centre, d'un bossage comme extrémité libre.

7. Ensemble optique selon l'une quelconque des revendications 1 à 3, **caractérisé en ce qu'**une collerette intérieure qui présente une face frontale radiale est prévue sur ledit anneau de support, **en ce que** lesdits segments sont des planches en forme de segments de cercle qui sont fendus en direction tangentielle et qui sont pourvus, à leur centre, d'un bossage comme extrémité libre, et **en ce que** lesdits segments sont attachés à la face frontale radiale.

8. Ensemble optique selon la revendication 7, **caractérisé en ce que** ladite collerette comporte une deuxième face frontale radiale et lesdits segments sont disposés sur les deux faces frontales de manière à supporter deux lentilles avec un seul support de lentille.
